# EUROPEAN PATENT APPLICATION

(11) **EP 3 836 313 A1**
(43) Date of publication of application: **16.06.2021**
(21) Application number: 19215516.6
(22) Date of filing: 12.12.2019
(51) Int. Cl.: H01R 13/52, H01R 13/506

(54) **SUPPORTING ELEMENT**

(71) Applicant: TE Connectivity Germany GmbH, 64625 Bensheim (DE)
(72) Inventor: KILIAN, Mirko, 64658 Fuerth (DE); FLOESSER, Michael, 69469 Weinheim (DE); PUCHNER, Ronny, 64756 Mossautal (DE); BEESE, Philipp, 65439 Flörsheim (DE)
(74) Representative: Grünecker Patent- und Rechtsanwälte PartG mbB

(57) **Abstract**

The invention relates to a supporting element (1) adapted to position a cable (2) in a hole, the supporting element (1) comprises a support part (4) and a holder part (6), which are joined together and made from different materials, particularly different resin materials. The supporting element (1) further comprises a cable opening (8) extending through the support part (4) and the holder part (6), whereby the cable opening (8) is adapted to receive the cable (2). In order to secure the supporting element (1) in the hole (3), the holder part (6) further comprises at least one retention element (10).

## Description

The invention relates to a supporting element for positioning a cable in a hole.

Such supporting elements may be used to stabilize the position of an electrical cable, particularly a single wire cable, in a hole of a connector housing. The supporting element is adapted to at least fixate the relative radial position of the cable within the hole. Usually, the supporting element is sleeved around the sheath of the cable and crimped to said cable. However, in existing applications movement, particularly axial and/or rotational movement, of the cable is transferred directly to the crimped area leading to a movement of the terminal. This may cause extensive wear on the terminal itself and to a mating tab connected to the terminal.

Therefore, it is an objective of the invention to provide a supporting element which reduces the wear of contact assemblies.

The invention solves the above-mentioned problem by providing a supporting element for positioning a cable in a hole. The supporting element comprises a support part and a holder part, which are joined together and made from different materials. The supporting element further comprises a cable opening extending through the support part and the holder part for receiving the cable. For securing the supporting element within the hole, the holder part further comprises at least one retention element.

With the inventive supporting element, the supporting element is fixed within the hole via the at least one retention element in at least one of the rotational position and axial position. The movement of the cable is thus transferred by the supporting element, particularly by the at least one retention element, to the hole. Consequently, the crimping region may be stabilized preventing movement of the terminal due to cable movement. Hence, the wear of the terminal and the mating tab may be reduced, increasing the life expectancy of a contact assembly even when subjected to stress such as vibrations.

The invention can be further improved by the following features, which are independent from one another with respect to their respective technical effects and which can be combined arbitrarily.

According to a first embodiment of the invention, at least one of the holder part and the support part may be substantially cylindrical and the cable opening may be arranged coaxially to the substantially cylindrical holder part and/or support part, therefore determining the relative position of the cable within the hole. The cable may be arranged coaxially in the hole so that the distance to the wall of the hole is substantially equal in any radial direction preventing an imbalance during the insertion of the supporting element with the cable into the hole.

The support part and the holder part may be formed by different materials, particularly different resin materials. Each part may be optimized according to its respective task. The holder part may comprise a material that has at least one of a higher stiffness and a higher hardness than the material of the support part. The higher stiffness may prevent the holder part to deform due to the force applied to the holder part upon movement of the cable. The holder part may be rather rigid compared to the support part for transferring the force applied to the holder part due to movement of the cable relative to the hole, e.g. pulling the cable along a longitudinal axis or rotating the cable around the longitudinal axis. The stiffness of the holder part and the support part may be compared by the Young's modulus, whereby the Young's modulus of the holder part may be higher than the Young's modulus of the support part.

The support part may be a seal part optimized for sealing the cable, the hole and/or the terminal against moisture or other external particles such as dust. The seal part may comprise a silicone, particularly a silicone composite, which may provide a hermetic seal.

The holder part on the other hand may be optimized for securing the relative position of the supporting element within the hole, particularly in the axial and/or circumferential direction. The holder part may comprise a thermoplastic material, which can comprise a relatively high stiffness and/or hardness compared to the support part and still can be processed easily such as by an injection molding process. However, the holder part may also comprise a metal.

The support part and the holder part may be joined integrally with one another forming a monolithic unit. Therefore, the holder part and the support part may not be easily detached from one another due to stress. The supporting element may, for example, be formed as a multi-component molded part, i.e. molding of two or more components in at least two process steps. The holder part, which preferably is formed by a thermoplastic material or a composition comprising a thermoplastic material, may be formed in a first process step and the support part may be subsequently molded in a second process step.

Consequently, the supporting element may be produced in mass scale in a cost effective manner. Alternatively, the holder part may comprise a metal having a high rigidity.

The support part and the holder part may be adhesively bonded to one another increasing the rigidity of the joint between the holder part and the support part. The bond may be a chemical bond that may be established during the multi-component molding process.

Alternatively or additionally, the support part and the holder part may be engaged to one another in a positive fit. Preferably, the support part and the holder part may be joined to one another along a longitudinal axis and the positive fit may block a movement of the holder part relative to the support part along the longitudinal axis.

The holder part may form an axial protrusion extending essentially parallel to the longitudinal axis. The axial protrusion may be substantially circumferential and be received in the support part. The support part may be molded over the protrusion to ensure a tight and sealed fit between the support part and the protrusion.

The protrusion may comprise an essentially undulating outer shape extending substantially parallel to the longitudinal axis. The undulating shape creates radial projections and indentations. The support part can nestle to the undulating shape further forming a positive fit hindering a relative movement of the support part and the holder part substantially parallel to the longitudinal axis. Therefore, the joint between the support part and the holder part may be further reinforced. It is noted that the undulating shape is not limited to a so-called "sine"-waveform. Any other waveforms such as square, triangle and sawtooth waveforms can be implemented.

To further increase the strength of the joint between the support part and the holder part, at least one of the holder part and the support part may comprise at least one radial protrusion, the at least one radial protrusion extending into the respective other of the holder part and the support part. The at least one radial protrusion may extend into an undercut formed in the respective other of the holder part and the support part further forming a positive fit substantially parallel to the longitudinal axis. The at least one radial protrusion may extend further radially than the radial projections formed by the outer shape increasing the overlap between the radial protrusion and the respective other of the support part and the holder part.

In order to keep the supporting element compact, an outer surface of the support part and the holder part arranged adjoining to one another essentially parallel to the longitudinal axis may at least partly be flush to one another. In other words, the support part and the holder part may at least partly comprise essentially the same outer diameter.

The at least one retention element may be an outer circumferential feature of the holder part. For securing the supporting element in the hole, the at least one retention element may be adapted to engage a complementary formed retention element of the hole. The at least one retention element may be a recess adapted to receive the complementary formed retention element. For an easier assembly of the supporting element and the hole, the at least one retention element may be formed as a protruding elastically deflectable latch.

The at least one retention element and the holder part may be formed integrally with one another as a monolithic component, allowing for an easy and cost efficient production of the supporting element.

In case the at least one retention element is formed as an elastically deflectable latch, the latch may be attached to a body of the holder part distal to the support part and extend obliquely towards the support part. Consequently, the latch may be elastically deflected radially inwards upon insertion into the hole and once it is aligned with the complementary formed retention element of the hole, e.g. a recess, the latch may revert to its initial position and abut a wall of the recess at least in one direction.

In order to provide space for the at least one retention element, particularly the elastically deflectable latch, to be deflected radially inwardly, the at least one retention element may be aligned with at least one notch formed on the supporting element. The notch may be formed on an outer surface of the holder part and extend from the point at which the at least one retention element is attached to the body of the holder part towards the support part.

To further stabilize the supporting element, at least two retention elements are provided, the at least two retention elements being distant from one another along the circumference of the supporting element. If there is an even number of retention elements, a pair of retention elements may be arranged diametrically to one another. The at least two retention elements may be evenly distributed along the circumference of the body of the holder part.

For each retention element a separate notch may be provided on the outer surface of the holder part's body. Therefore, the body of the holder part may have an essentially circumferential cross section in a plane essentially perpendicular to the longitudinal axis, whereby the notches define sections with a first radius, which are connected by sections with a second radius, the second radius being larger than the first radius.

Preferably, three retention elements may be provided, distributed evenly along the circumference of the body of the holder part. Consequently, a center axis of each retention element may be arranged about 120° to the respective other center axes of the neighboring retention elements. This arrangement may further optimize the stabilization of the supporting element in the hole in various radial directions. The forces may be evenly distributed via the three retention elements.

To further simplify the structure of the holder part, the arc length of each notch may be essentially equal and the arc of each connecting section may be essentially the same length forming a rotationally symmetrical holder body. In this case, at least the holder part is rotationally symmetric every 120°, allowing the user to insert the supporting element into the hole in three different rotational positions.

The outer circumference of the holder part may be defined by the connecting sections, whereby the at least one retention element is adapted to be deflected radially inwards so as to be arranged along the circumference of the connecting sections. Therefore, the forming of the hole may be further facilitated. The hole may at least partially be adapted to fittingly receive the outer circumference of the holder part defined by the connecting sections.

The holder part may comprise a neck section formed at a distal end distant from the support part. The neck section may have a smaller diameter than the remainder of the holder part. A metallic wire crimping section may be attached to the holder part, particularly the neck of the holder part. As the holder part may comprise a rather rigid material compared to the support part, the crimping of the supporting element to the cable and the terminal may be further facilitated.

The neck section may end in a radially protruding collar at a side facing away from the support part. Thus, slipping off of the attached, particularly crimped, metallic wire crimping section from a free end of the neck section may be prevented.

The support part may preferably be substantially cylindrical having at least partially a larger diameter than the maximum diameter of the holder part. The support part may thus act as a bung sealing the hole.

To increase the sealing efficiency of the support part to seal the hole, the support part may comprise circumferentially extending ribs on an outer peripheral surface. With each rib the holding force of the supporting element within the hole may be increased and each rib may act as an additional seal against the entry of moisture or dust further into the hole. Preferably, the extending ribs may be formed integrally by the support part.

Moreover, to further increase the sealing efficiency of the supporting element to the cable inserted into the cable opening, at least the support part may form circumferentially extending ribs at a wall of the cable opening. Each rib may press against the inserted cable increasing the retention force acting on the cable. Each rib may act as a seal on its own, so that if by any chance moisture or dust manages to pass one rib, the following rib may block the further progress of the moisture or dust along the supporting element.

A connector housing for receiving a cable may comprise a hole and a supporting element according to any one of the above embodiments. The hole may comprise at least one complementary formed retention element adapted to engage the at least one retention element in a positive fit at least in one direction. Preferably, the at least one retention element and the at least one complementary retention element may be engaged such that they block a removal of the supporting element from the hole along the longitudinal axis.

Additionally or alternatively, the at least one retention element and the at least one complementary formed retention element may engage each other in a positive fit blocking a rotational movement around the longitudinal axis.

Preferably, the holder part may be prestressed in a direction towards the support part. Therefore, a play in the axial direction between the at least one retention element and the at least one complementary formed retention element may be compensated. The support part may comprise a material with elastic properties, such as a silicone. Upon insertion of the supporting element into the hole, the holder part is pulled further into the hole resulting in stretching of the support part. Once the insertion force is removed, the support part recoils and thus pulls the holder part towards itself.

According to an exemplary embodiment, the at least one retention feature may be formed as an elastically deflectable latch and the complementary formed retention element may be formed as a recess in the hole. The recess may be limited along the circumferential direction so that the latch received in the recess abuts a lateral wall of the recess blocking a rotational movement around the longitudinal axis from the supporting element relative to the hole.

In the following, the supporting element according to the invention is explained in greater detail with reference to the accompanying drawings, in which exemplary embodiments are shown.

In the figures, the same reference numerals are used for elements which correspond to one another in terms of their function and/or structure.

According to the description of the various aspects and embodiments, elements shown in the drawings can be omitted if the technical effects of those elements are not needed for a particular application, and *vice versa:* i.e. elements that are not shown or described with reference to the figures but are described above can be added if the technical effect of those particular elements is advantageous in a specific application.

In the figures:
- Fig. 1: shows a schematic perspective view of a supporting element according to the invention; and
- Fig. 2: shows a schematic cut view of the supporting element mounted in a hole.

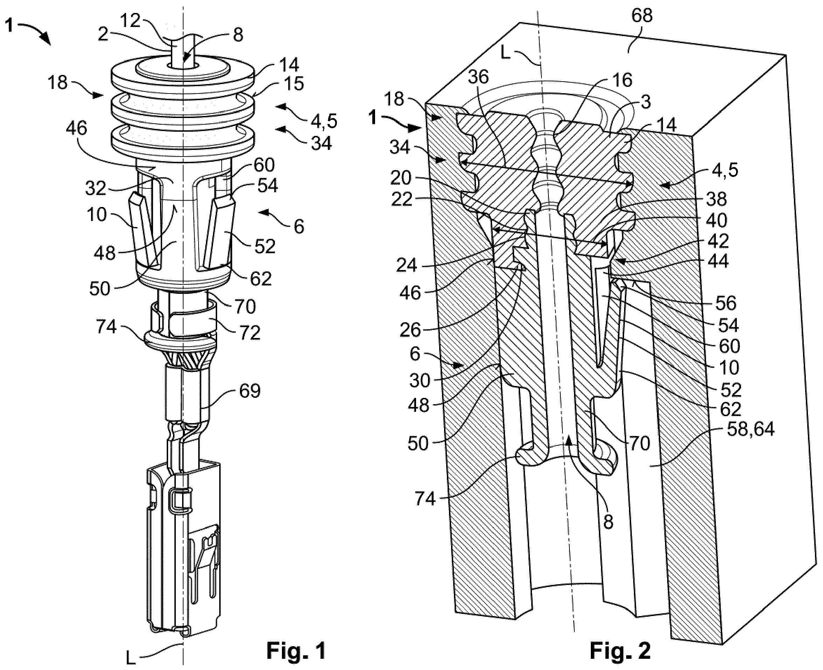

An exemplary embodiment of the inventive supporting element 1 is explained with reference to Figs. 1 and 2. Fig. 1 shows a schematic perspective view of the supporting element 1 and Fig. 2 shows a schematic cut view of the supporting element 1 mounted in a hole 3.

The supporting element 1 is adapted to position a cable 2 in a hole, the supporting element 1 comprises a support part 4 and a holder part 6, which are joined together and made from different materials, particularly different resin materials. The supporting element 1 further comprises a cable opening 8 extending through the support part 4 and the holder part 6, whereby the cable opening 8 is adapted to receive the cable 2. In order to secure the supporting element 1 in the hole 3, the holder part 6 further comprises at least one retention element 10.

The cable 2 may preferably be a single wire cable 12, which is inserted through the cable opening 8. Preferably, at least one of the support part 4 and the holder part 6 may be substantially cylindrical and the cable opening 8 may be arranged coaxially in the supporting element 1.

The support part 4 may be a seal part 5 optimized for sealing the cable 2 received in the cable opening 8 and the hole 3. Therefore, the support part may comprise an elastic material, particularly a silicone material, which has good sealing characteristics. The holder part 6, however, may be optimized for securing the supporting element 1 to the hole and/or for fixedly attaching the supporting element 1 to the cable 2, e.g. via crimping. Therefore, the holder part 6 may comprise a material that has at least one of a higher stiffness and a higher hardness than the material of the support part 4. The holder part 6 may preferably comprise a thermoplastic material which may be relatively rigid compared to the support part 4.

The support part 4 may comprise circumferentially extending ribs 14 on an outer peripheral surface 15, which may be pressed against the wall of the hole to further improve the supporting reliability of the supporting element 1 supporting the hole. To further increase the supporting reliability of the supporting element 1 supporting the cable 2, a wall of the cable opening 8 may comprise circumferentially extending ribs 16. The circumferentially extending ribs 16 on the wall of the cable opening 8 may be limited to the support part 4. However, the wall of the cable opening 8 at the holder part 6 may also feature circumferentially extending ribs, which further stabilize the cable in the supporting element 1.

The support part 4 and the holder part 6 may be joined to one another along a longitudinal axis L. Preferably, the support part 4 and the holder part 6 may be joined integrally with one another as a monolithic unit 18. The supporting element 1 may, for example, be a multi-component molded part. The holder part 6 may be formed in a first injection molding step and in a second injection molding step the support part 4 may be formed onto the holder part 6.

During the addition of the support part 4, the material of the support part 4 and the holder part 6 may form chemical interlinks leading to a strong bond between the support part 4 and the holder part 6.

Alternatively or additionally, the support part 4 and the holder part 6 may be engaged to one another in a positive fit blocking a detachment between the holder part 6 and the support part 4 in a direction parallel to the longitudinal axis L. The holder part 6 may preferably comprise a substantially cylindrical axial protrusion 20, which may be received in the support part 4. The support part 4 may be formed onto the axial protrusion 20 by molding the support part 4 over the axial protrusion 20 in a multicomponent molding process.

The axial protrusion 20 may comprise an undulating shape substantially parallel to the longitudinal axis L creating radial indentations 22 and projections 24. The radial indentations may receive parts of the support part 4 and the projections 24 may project into the support part 4 creating an overlap between the projections 24 and the parts of the support part 4 received in the indentations, the overlap hindering a detachment of the support part 4 and the holder part 6.

As shown in Fig. 2 the support part 4 may further comprise at least one radial protrusion 26 extending into the holder part 6 so as to be received in an undercut 30 formed in the holder part 6. This may further improve the joint between the support part 4 and holder part 6.

In this exemplary embodiment, the support part 4 may comprise three arms 32 arranged at 120° to one another, the arms 32 extending further in a direction essentially parallel to the longitudinal axis L than the remainder of the support part 4. Each arm 32 may be provided with the radial protrusion 26.

The support part 4 may comprise a sealing section 34 with a first diameter 36 defined by the circumferentially extending ribs 14. The first diameter may be larger than a diameter of a reception pocket 38 formed in the hole 3 for receiving the support part 4. In an intermediate section 42 following the sealing section 34 the support part 4 may comprise a second diameter 40, the second diameter 40 being smaller than the first diameter 36. In the intermediate section 42 the support part 4 and the holder part 6 may be joined together, meaning that in a cross section substantially perpendicular to the longitudinal axis L through the intermediate section 42 both the holder part 6 and the support part 4 may be present. The support part 4 may receive the axial protrusion 20 in the intermediate section 42.

The second diameter 40 of the support part 4 may be dimensioned so that the intermediate section 42 may be arranged in a constriction 44 formed in the hole 3 following the reception pocket 38. Therefore, the constriction 44 may prevent a too deep insertion of the supporting element 1 into the hole ensuring that the support part 4 seals an entrance of the hole 3.

The hole 3 may taper at the end of the reception pocket 38 to form the constriction 44. The supporting element 1 can slide along the tapering surface adjusting the position of the supporting element 1 within the hole 3.

At the intermediate section 42 the support part 4 may have an outer surface 46 which is at least at the arms 32 substantially flush with the adjoining outer surface 48 of a main body 50 of the holder part 6 preventing sharp edges which may damage the wall of the hole 3.

In this exemplary embodiment, the holder part 6 comprises a substantially cylindrical main body 50. Along the circumference of the main body 50 at a 120° interval, retention elements 10 in the form of elastically deflectable latches 52 are provided. Consequently, three elastically deflectable latches 52 are provided, each latch 52 being distanced from the other latches 52 in a circumferential direction. The latch 52 may be formed integrally with the main body 50 as a monolithic component. The latch 52 may be attached to the main body 50 on one end and extend obliquely towards the support part 4 , so that at least a tip 54 of the latch 52 may protrude from an outer circumference of the main body 50. The tip 54 may abut a wall 56 of a complementary formed retention element 58 in the hole 3.

The main body 50 may comprise a notch 60 formed on the outer surface 48 for each retention element 10, i.e. the elastically deflectable latches 52. Consequently, three notches 60 may be formed, whereby their center axes substantially parallel to the longitudinal axis L may be arranged 120° to one another. The retention element 10 may be aligned with the respective notch 60 so that the notch 60 provides space for the retention element 10 to be deflected radially inwards.

The notch 60 may comprise a substantially rectangular shape wherein the latch 52 is connected to a base 62 distal to the support part 4 of the notch 60. The arms 32 may at least partially form a frame of the notch 60 bordering the notch in the circumferential direction. Furthermore, a front end of the notch 60 may be bordered by the support part 4.

The elastically deflectable latch 52 may slide along the tapered surface forming the constriction 44 in the hole 3 and be radially deflected inwardly into the notch 60 so that the holder part 6 may pass the constriction 44. Thereafter, the complementary retention element 58 of the hole 3 may be provided by, for example, radial recesses 64 allowing the latch 52 to pivot back towards its initial position so that the tip 54 may abut the wall 56 preventing movement of the supporting element 1 in the axial direction essentially parallel to the longitudinal axis L from the holder part 6 towards the support part 4.

The support part 4 may preferably comprise a material with good elastic properties, such as silicone, so that by the holder part 6 passing the constriction 44, the support part 4 is at least partly stretched along the longitudinal axis L. Once the insertion force is removed, the stretched part of the support part 4 recoils, pulling the holder part 6 along the longitudinal axis L towards the support part 4. Therefore, the holder part 6 is prestressed towards the support part 4, eliminating a possible play between the at least one retention element 10 and the complementary retention element 58 in the axial direction. Consequently, the supporting element 1 may reliably transfer any pulling motion of the cable out of the hole to the housing.

The recesses 64 may be separated from one another so that the retention elements 10 abut a border of the respective recesses 64 blocking a rotational movement of the supporting element 1 within the hole 3.

The hole 3 may be, for example, a hole 3 in a connector housing 68. Due to the fixation of the supporting element 1 in the hole 3 movement of the cable 2 protruding out of the hole 3, particularly pulling and/or rotational movement, will be directly transferred via the retention elements 10 to the housing 68 and not to a terminal 69 that may be crimped onto the supporting element 1, particularly the holder part 6.

As can be seen in Fig. 1, the terminal 69 may be crimped to the holder part 6. For this, the holder part 6 comprises a neck section 70 formed at a distal end 72 distant to the support part 4, the neck section 70 having an essentially cylindrical form with a smaller diameter than the main body 50 of the holder part 6. The retention element 10 may be formed on the main body 50 and be arranged between the neck section 70 and the support part 4 at the neck section 70.

A metallic wire crimping section 72 may be attached, particularly crimped, to the neck section 70. Therefore, at the neck section 70 the supporting element 1 can be fixedly attached, particularly crimped, to the cable 2.

The metallic wire crimping section 72 may be formed by crimping wings of the terminal 69, thereby simultaneously crimping the terminal 69 to the neck section 70 and the supporting element 1 to the cable 2. However, the metallic crimping section 72 and the terminal 69 may be separate parts.

To prevent the metallic wire crimping section 72 from slipping off of the neck section 70, the neck section 70 may end in a radially protruding collar 74.

The hole 3 may be, for example, a hole 3 in a connector housing 68. Due to the fixation of the supporting element 1 in the hole 3, movement of the cable 2 protruding out of the hole 3, particularly pulling and/or rotational movement, will be directly transferred via the retention elements 10 to the housing 68 and not to a terminal 69 that may be crimped to the cable 2.

In the shown embodiment, the supporting element 1, particularly the support part 4, has a sealing function sealing the connection between the cable and the supporting element 1 and the connection between the cable and the housing. However, within the scope of this invention, the support part does not need to be a seal. The support part may comprise notches or openings penetrating the support part in the axial direction.

### REFERENCE NUMERALS

- 1: supporting element
- 2: cable
- 3: hole
- 4: support part
- 5: seal part
- 6: holder part
- 8: cable opening
- 10: retention element
- 12: single wire cable
- 14: rib on outer peripheral surface of support part
- 15: outer peripheral surface
- 16: rib on wall of cable opening
- 18: monolithic unit
- 20: axial protrusion
- 22: radial indentation
- 24: radial projection
- 26: radial protrusion
- 30: undercut
- 32: arm
- 34: sealing section
- 36: first diameter of support part
- 38: reception pocket
- 40: second diameter of support part
- 42: intermediate section
- 44: constriction
- 46: outer surface of support part
- 48: outer surface of main body
- 50: main body of holder part
- 52: elastically deflectable latch
- 54: tip of latch
- 56: wall
- 58: complementary formed retention element
- 60: notch
- 62: base
- 64: recess
- 68: connector housing
- 69: terminal
- 68: terminal
- 70: neck section
- 72: metallic wire crimping section
- 74: collar

- L: longitudinal axis

## Claims

1. Supporting element (1) for positioning a cable (2) in a hole (3), the supporting element (1) comprising a support part (4) and a holder part (6), which are joined together and made from different materials, the supporting element (1) further comprising a cable opening (8) extending through the support part (4) and the holder part (6), the cable opening (8) being adapted to receive the cable (2), wherein the holder part (6) further comprises at least one retention element (10) for securing the supporting element (1) within the hole (3).

2. Supporting element (1) according to claim 1, wherein the material of the holder part (6) has at least one of a higher stiffness and a higher hardness than the material of the support part (4).

3. Supporting element (1) according to claim 1 or 2, wherein the holder part (6) and the support part (4) are joined integrally with one another forming a monolithic unit (18).

4. Supporting element (1) according to any one of claims 1 to 3, wherein the supporting element (1) is a multi-component molded part.

5. Supporting element (1) according to any one of claims 1 to 4, wherein the support part (4) and the holder part (6) are engaged to one another in a positive fit.

6. Supporting element (1) according to any one of claims 1 to 5, wherein in the holder part (6) forms a protrusion (20), which is received in the support part (4).

7. Supporting element (1) according to any one of claims 1 to 6, wherein at least one of the holder part (6) and the support part (4) comprises at least one radial protrusion (26) extending into the respective other of the holder part (6) and support part (4).

8. Supporting element (1) according to any one of claims 1 to 7, wherein at least one retention element (10) is one of a recess and a protruding elastically deflectable latch (52).

9. Supporting element (1) according to any one of claims 1 to 8, wherein at least two retention elements (10) are provided, the at least two retention elements (10) being distant from one another along the circumference of the supporting element (1).

10. Supporting element (1) according to any one of claims 1 to 9, wherein the holder part (6) comprises a neck section (70) formed at a distal end distant to the support part (4), the neck section (70) having a smaller diameter than the remainder of the holder part (6).

11. Supporting element (1) according to claim 10, wherein the at least one retention element (10) is arranged between the neck section (70) and the support part (4).

12. Supporting element (1) according to any one of claims 1 to 11, wherein a metallic wire crimping section (72) is attached onto the holder part (6).

13. Supporting element (1) according to any one of claims 1 to 12, wherein the supporting element (1) comprises circumferentially extending ribs (14, 16) formed by the support part (4) at at least one of an outer peripheral surface and a wall of the cable opening (8).

14. Connector housing (68) for receiving a cable (2), the housing (68) comprising a hole (3) and a supporting element (1) according to any one of claims 1 to 13 received in the hole (3), the hole (3) comprising a complementary formed retention element (58) and the at least one retention element (10) are engaged to one another in a positive fit at least in one direction.

15. Connector housing (68) according to claim 14, wherein the holder part (6) is prestressed towards the support part (4)
